# EUROPEAN PATENT SPECIFICATION

(11) **EP 3 875 702 B1**
(45) Date of publication and mention of the grant of the patent: **26.10.2022**
(21) Application number: 21159181.3
(22) Date of filing: 25.02.2021
(51) Int. Cl.: E04B 1/94, E04B 1/04, C04B 28/04, C04B 20/00

(54) **METHOD FOR CONNECTING WALL PANELS TO EACH OTHER AND TO A SUPPORT PILLAR AND FOR FIREPROOFING THE CONNECTION**
VERFAHREN ZUM VERBINDEN VON WANDPANEELEN MITEINANDER UND MIT EINEM STÜTZPFEILER UND ZUM FEUERFESTMACHEN DER VERBINDUNG
PROCÉDÉ PERMETTANT DE RELIER DES PANNEAUX MURAUX ENTRE EUX ET À UN PILIER DE SUPPORT ET D'IGNIFUGER LE RACCORDEMENT

(30) Priority: 27.02.2020 HU 2000074; 23.02.2021 HU 2100062
(43) Date of publication of application: 08.09.2021
(73) Proprietor: Budapesti Müszaki és Gazdaságtudományi Egyetem, 1111 Budapest (HU); SW Umwelttechnik Magyarország Kft, 2339 Majosháza (HU)
(72) Inventor: Balázs L, György, 1116 Budapest (HU); Majorosné Lublóy, Éva Eszter, 1183 Budapest (HU); Hlavicka, Viktor, 1134 Budapest (HU); Lizakovszky, Géza, 3530 Miskolc (HU); Molnár, Tamás, 1191 Budapest (HU); Szarka, Szabolcs, 3531 Miskolc (HU)
(74) Representative: Mészarosné Donusz, Katalin

(56) References cited:
- CN-A- 103 526 861
- DE-U1- 20 121 159
- US-A1- 2017 121 967

## Description

The invention relates to a method for connecting wall panels to each other and to a column and fireproofing the connection.

Numerous examples are known for materials and manufacturing process of wall elements and monolithic walls used for building fire-retardant walls (firewalls). These include for example monolithic reinforced concrete walls, special brick walls or wall structures covered with fire-resistant plasterboard.

Patent description HU 210 364 discloses a fire-retardant material which forms a retardantlayer coating on the walls of a building.

Solutions are also known wherein prefabricated wall elements are assembled on-site.

Publication document CN107100334 describes a wall forming a double-layer coating which comprises cellulose and rubber material in addition to conventional components.

Publication document CN103526861 describes a fire-protection self-supporting wall.

A fire-retardant wall (firewall) should provide resistance to fire (protection against burnthrough, protection against heat-through, protection against smoke break-through etc.), additionally it should provide mechanical resistance to physical impacts, lifetime of several decades, fast and simple installability, simple replaceability in case of damage, preservation of the environment, which applies also to the manufacturing process.

The known solutions are able to meet the most stringent requirements of fire-resistance only partly or not at all, which is the case with reinforced concrete walls assembled of prefabricated reinforced concrete elements on-site. Furthermore, the known solutions fulfil only partly the requirements to be met simultaneously. With fire-retardant walls made of prefabricated reinforced concrete elements, a fire-resistance that can be guaranteed is typically 60, maximum 90 minutes (REI). The plasterboard mounted walls have good fire-resistance limit, but do not have load-bearing capacity. Making brick walls (masonry) is time-consuming and manual-labor intensive, in addition, in many cases said walls can deliver the desired fire-resistance limit with relatively great thickness only, and their building height is also limited. Construction of cast-in-place wall elements is a slow and complicated process.

Publication document CN104108949 discloses a fire-resistant wall panel which is a lightweight heat insulated wall panel prefabricated of a porous concrete, i.e. having a bulk density of 300 to 1800 kg/m³, wherein the strength of the concrete is increased by adding polypropylene fibers.

Publication document CN109206114 discloses a similar heat insulation wall panel, and here the joint seal consists of only one part.

Publication document CN109235708 describes a building structure system of prefabricated reinforced concrete material, wherein a one-piece seal is used for sealing the gaps between the partition walls.

The disadvantage of known solutions is that the used seals handle only the problem of sealing the joints, but do not address the load-transfer and load-bearing functions of the joint seal.

The objective of the invention is to develop a method which provides the fire-retardant sealing of the connections with load bearing capacity between each panel, and between the wall panel and the column by using a concrete of special composition, and to build a prefabricated reinforced concrete fire-retardant wall satisfying the most stringent requirement of fire-resistance of REI-120 (120 min) or even REI-180 (180 min) by selecting properly the sealants and jointing materials for the gaps between the elements and by applying these materials in a specific order.

The invention is based on the recognition that explosive spalling and bum-through of the high-strength concrete material of concrete layers of the wall panel and the column can be prevented and delayed by adding hollow plastic fibers to the concrete mix of the reinforced wall panel and the column of a composition known per se, with C30/37 strength class and with a bulk density of 2000-2500 kg/m³,

Furthermore, a discovery of the invention is that the fire-retardant capability can be further increased by using the geometry of the connection of the wall elements to each other and to the column, in combination with the sealants and joint fillers for the environment of the connection.

Importantly, using expanding materials for closing the jointings at the connection region of the wall panels and/or the columns is better be avoided, since these materials when exposed to heat, undergo expansion, which may result in displacement of the interconnected wall panels and/or column.

The object of the invention is accomplished by a method wherein junctions are formed at the connection regions, wherein forming said junctions is realized by using shaped connecting parts and/or reinforcements and/or fasteners, and wherein said junctions are sealed once the connecting process is complete. The invention is characterized in that following the step of connecting, the joints between the load-bearing connection surfaces are filled with a fire-resistant high-strength non-shrink mortar by means of junctions formed in the wall panels and/or in the wall panels and the column made from concrete with C30/37 strength class and with a bulk density of 2000 to 2500 kg/m³ containing hollow synthetic fibers, preferably having a length of 10 mm, then the joints are sealed with a resilient fire-resistant sealing material from the fire-exposed side.

In a preferred embodiment of the method according to the invention, interconnecting the single-layer wall panels is carried out by means of a stepped configuration for enhancing fire-protection, wherein a washer is disposed between a protrusion of one of the wall panels and a recess of the other wall panel for adjusting the level.

In another preferred embodiment of the method according to the invention, a reinforcement is disposed subsequently between the single-layer wall panel and the column for interconnecting the single-layer wall panel and the column, and the environment of said reinforcement is filled with a fire-resistant high-strength non-shrink mortar.

In yet another preferred embodiment of the method according to the invention, a dowel is inserted in the load-bearing part for interconnecting the sandwich-structure wall panels, and the environment of said dowel is filled with a fire-resistant high-strength non-shrink mortar.

In an expedient embodiment of the method according to the invention, a reinforcement is disposed in the carrier layer of the sandwich panel during interconnecting the sandwich-structure wall panel and a column, said reinforcement is coupled with a fastener connected to a fastener being mounted in the column during the production to preserve the load-bearing capacity, and these are fastened with a screw, then the connection region is filled with a fire-resistant filler.

In a further embodiment of the method according to the invention, in the case of intermediate wall panels, interconnecting the sandwich-structure wall panel and the column is carried out by using a dowel increasing the load-bearing capacity, inserted in the column and the load-bearing part of the wall panel.

In all embodiments of the method according to the invention, filling the connection points is carried out by using a filling mortar preferably with a chloride-ion content of ≤ 0.5 mm/%, and the jointing at the connection points is sealed with a sealing material providing insulation, preferably with a halogen and solvent free silicone based sealant.

Possible embodiments for connecting the fire-retardant wall panel used in the method according to the invention will be described in detail with reference to the accompanying drawings in which:
Figure 1 is a connection of single-layer fire-retardant walls in section,
Figure 2 is a connection mode of a single-layer fire-retardant wall and a column in section,
Figure 3 is a junction connection of two sandwich-structure walls in section,
Figure 4 is a section of the junction connection of Figure 3 taken along section plane I-I,
Figure 5 is a junction connection of a sandwich-structure wall and a column in section as for the upper element,
Figure 6 is a section of the junction connection of Figure 5 taken along section plane II-II,
Figure 7 a junction configuration of a column and a sandwich-structure wall in section as for the lower element,
Figure 8 is a section of the junction connection of Figure 7 taken along section plane III-III.

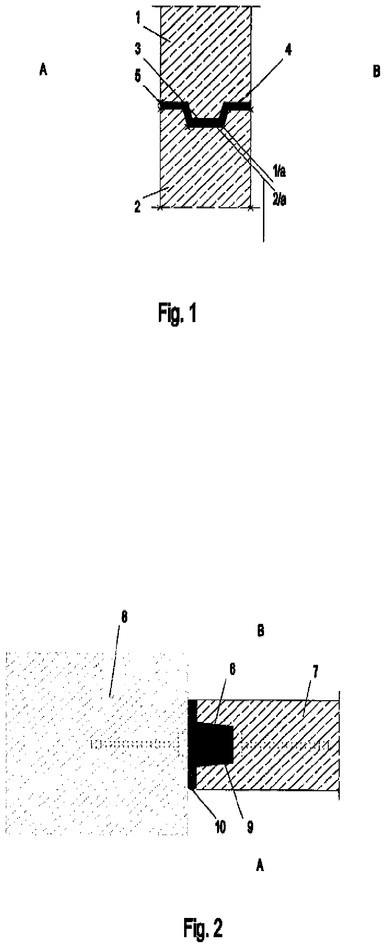

Figure 1 shows the connection modes of the prefabricated single-layer reinforced concrete fire-retardant wall panels 1 and 2 used in the method according to the invention.

The composition of panels 1 and 2 is essentially identical to the composition of the known prefabricated reinforced concrete wall panels with C30/37 to C50/60 strength class and with a bulk density of 2000-2500 kg/m³, wherein the steel frame is formed in a prepared template in a known manner during production of said panels, then the concrete mix is prepared, composition of which for panel 1 and 2 of Figure 1 is as follows:
cement (Portland Cement CEM I or CEM II) 13.3 %vol
aggregate e.g. quartz sand 59.8 %vol
water 18 %vol
an admixture known per se (concrete plasticizer) 0.6 %vol
limestone as a supplementary cementitious material 2.3 %vol
hollow polypropylene plastic fibers with a melting point of between 100 and 400 °C 0.1 %vol. The remaining volume is filled by air.

Conventional components are mixed together in a manner known per se, and the polypropylene fibers are mixed to the mix in a last step. It is noted that adding and mixing the polypropylene fibers may take place in the mixer truck during transport, in case wall panels 1 and 2 are made by on-site casting.

Length of the added hollow polypropylene fibers (plastic fibers) is preferably about 10 mm.

The mix produced in a manner above is poured into the prepared template, and compaction is carried out if necessary. However, care must be taken to retain sufficient air in the concrete during compaction, which has a significant role in the fire resistance. The concrete is cured during the curing period, and then the finished wall panels are removed from the form.

It is noted that production of the wall panels carried out by a casting technology known per se, by compaction with needle vibrator with or without template heating, and the curing period is comprised from 12 to 16 hours.

Composition of the columns bearing the wall panels:
cement (Portland Cement CEM I or CEM II) 15.6 %vol
aggregate (e.g. quartz sand) 62.8 %vol
water 18 %vol
an admixture known per se (concrete plasticizer) 0.6 %vol
supplementary material (limestone flour) 1.5 %vol
polypropylene fibers 0.5 %vol.

The further volume filling material is air.

It is noted that the admixture facilitates the plasticization of the mix.

Panels 1 and 2 are to be coupled to each other during forming the building-walls.

When forming the fire-retardant walls, special aspects are taken into consideration in performing the connecting or splicing of the panels 1 and 2.

In Figure 1, splicing of wall panels 1 and 2 is shown. During connecting or splicing, a stepped configuration is created on the connecting parts of panels 1 and 2 by forming a protrusion 1a on wall panel 1 and a recess 2a in panel 2, and a washer 3 is disposed in recess 2a for level adjusting. Subsequently, panels 1 and 2 are filled into each other, causing the protrusion 1a of wall panel 1 to engage the recess 2a of panel 2. Subsequently, the part between wall panels 1 and 2 is filled with a fire-resistant high strength non-shrink mortar 4.

The fire-exposed side A is of relevance from the aspect of fire, therefore, a jointing 5 is formed here at the connection of panels 1 and 2, said jointing then is filled with a fire-retardant resilient material.

The foam material 4 between wall panels 1 and 2 is a fire-resistant non-shrink high-strength mortar, amount of which is 1 to 3 kg/dm³ related to the volume of the cavity.

At the connection of the shown panels 1 and 2, MAPEI Mapefil 1.95 kg/dm³ mortar with a chloride-ion content of ≤ 0.5 mm/% was used.

Hilti CFS-S SIL material was applied for jointing 5 from the fire-exposed side A. This halogen and solvent free silicone based sealant provides a highly-resilient fire-resistant joint, amount of the applied jointing material depending on the size of the joint between wall panels 1 and 2.

During constructing a building, however, not only a fireproof connection of panels 1 and 2, but also a load-bearing fireproof connection between a column 8 and a wall panel 7 is to be created.

The connection of wall panel 7 and column 8 is shown in Figure 2.

The design of wall panel 7 is identical to the design of wall panels 1 and 2 described in relation to Figure 1, said wall panel 7 also contains polypropylene fibers. An additional reinforcing steel reinforcement 6 is incorporated in wall panel 7 between wall panel 7 and column 8 for connecting it to the column 8, thereby a satisfactory strength for the connection of wall panel 7 and column 8 is assured.

Following the incorporation of reinforcement 6, the space around reinforcement 6 is filled with a fire-resistant high-strength non-shrink mortar 13, and then the jointing 10 formed from the fire-exposed side A at the juncture of wall panel 7 and column 8 is filled with a resilient fire-retardant filler.

Filling the jointings at the connection of column 8 and wall panel 7 is carried out preferably with materials described in relation to Figure 1.

During fire testing of the single-layer wall panels 1 and 2 it was found that the concrete containing also polypropylene fibers (plastic fibers) behaved more favorably at high temperatures than conventional concretes, thus a higher fire-resistance limit can be achieved.

In addition to application of single-layer wall panels, so called sandwich-structure wall panels have come to the fore, wherein a heat insulation material is arranged between the two reinforced concrete parts, and these three layers constitute a common unit.

In a sandwich-structure wall panel, one of the reinforced concrete wall panels forms the load-bearing part, while the other panel on the opposite side of the insulation material forms the skin, wherein the load-bearing part and the skin have varying composition.

The material of the heat insulation part between the load-bearing part and the skin is known per se, therefore, will not be discussed in detail.

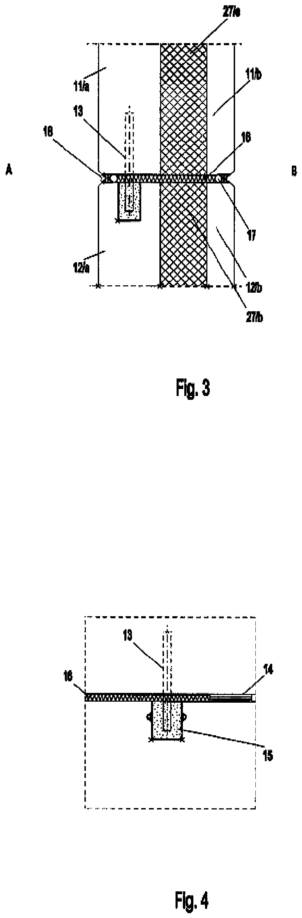

Figures 3 and 4 illustrate the connection of wall panels comprising the load-bearing layer 11a and the skin 11b, and the load-bearing layer 12a and the skin 12b.

In Figure 3 the interconnection mode of two sandwich-structure wall panels is shown, wherein the wall panel consists of load-bearing parts 11a and 12a, respectively, and skins 11b and 12b, respectively, wherein a heat insulation layer 27, preferably a rock wool layer is arranged between load-bearing parts 11a and 12a, respectively, and between skins 11b and 12b, respectively.

As a preliminary, the composition of load-bearing parts 11a and 12a, and skins 1 1b and 12b will be described.

Composition of load-bearing parts 11a and 12a:
cement (Portland clinker CEM I or CEM II) 14 %vol
aggregate (e.g. quartz sand) 64.4 %vol
water 17.3 %vol
admixture (concrete plasticizer) 0.6 %vol
limestone flour 2.6 %vol
mixture of polypropylene fibers 0.1 %vol,
the further material filling the material volume is air.

Composition of skins 11b and 12b:
cement (Portland Cement CEM I or CEM II) 11.3 %vol
aggregate (e.g. quartz) 67.4 %vol
water 17.2 %vol
admixture (concrete plasticizer) 0.5 %vol
supplementary material (limestone flour) 2.6 %vol
polypropylene fibers 0.1 %vol.

The further volume filling material is air.

It is noted that the admixture is used to plasticize the mix.

The prefabricated sandwich-structure reinforced concrete elements are to be coupled to each other during forming the building structure.

One of the wall panels to be coupled is the wall panel constituted by the load-bearing part 11a, the heat insulation material 27a and the skin 11b, and the other wall panel is made up of the load-bearing part 12a, the insulating layer 27b and the skin 12b.

A dowel 13 increasing the load-bearing capacity is inserted in the load-bearing parts 11a and 12a for coupling (see Figure 3). The area around said dowel 13 is filled with a fire-resistant non-shrink high-strength seal mortar 15 in the load-bearing parts 11a and 12a (see Figure 4).

A washer 14 is disposed between the sandwich-structure wall panels at their connection for level adjusting. The part between the two sandwich-structure wall panels is filled with a fire-resistant filler 16.

A resilient silicone seal 17 is disposed between the skins 11b and 12b on side B, while the jointing 18 between the load-bearing parts 11a and 12a is filled with a fire-resistant resilient material, preferably a resilient silicone sealing material from the fire-exposed side A.

Not only the coupling of the sandwich structure wall panels to each other, but also the connection of such wall panels to the column is of relevance from the aspect of forming the fire-retardant walls.

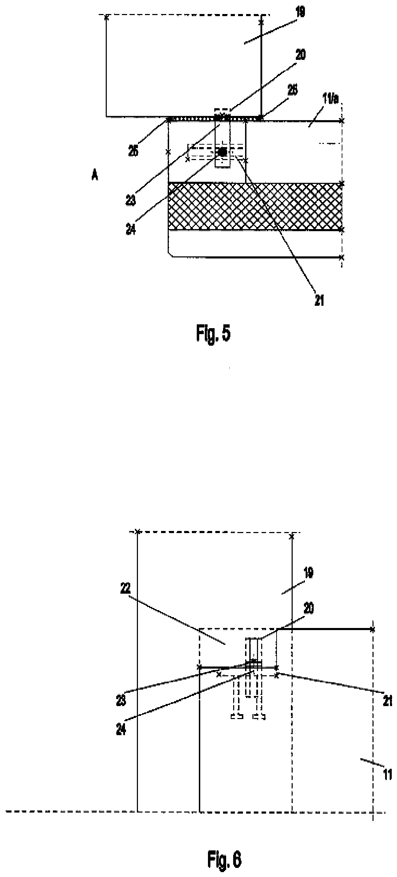

Figures 5 and 6 illustrate connecting of a sandwich-structure upper wall element to a column 19.

Connecting of the column 19 and the sandwich-structure wall panel is carried out at the load-bearing part 11a of the wall element.

A fastener 20 of galvanized steel is disposed on the prefabricated reinforced concrete column 19 (see Figure 5). A fastener 21 is formed also in the load-bearing part 11a of the wall panel (see Figure 6). The column 19 and the load-bearing part 11a of the wall panel are coupled via these two fasteners 20 and 21, and fixed to each other by a screw 24 (see Figure 6) for providing adequate load-bearing capacity, and the connection area is filled with a fire-resistant filler 22. The fitting area of the column 19 and the load-bearing part 1 1a is filled with fire-resistant silicone seal 26, and a resilient jointing 26 is made from the fire-exposed side A.

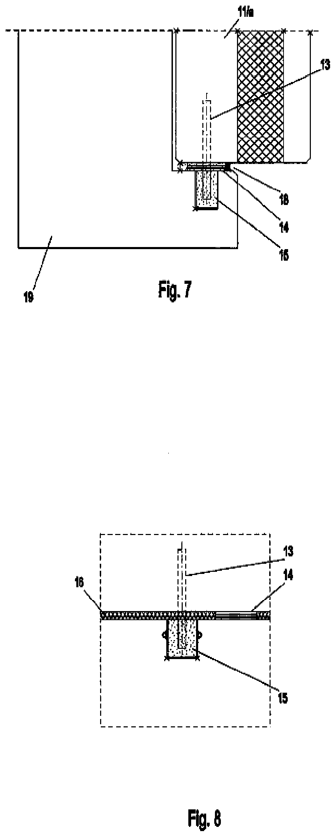

Figures 7 and 8 illustrate coupling of a sandwich-structure wall panel and a column 19, wherein a dowel 13 increasing the load-bearing capacity is arranged in the load-bearing part 11a of the wall panel, said dowel engaging in a part formed in the column 19. A washer 14 is disposed between the column 19 and the load-bearing part 11a for level adjusting, a seat receiving the dowel 13 is filled with a fire-resistant non-shrink high-strength seal mortar 15.

A fire-resistant filler 16, preferably rock wool is disposed in the joint between the column 19 and the load-bearing part 11a of the wall element (see Figure 8), and then the joint is sealed with a fire-resistant jointing 18.

An advantage of the method according to the invention is that the wall panels and columns hereby used of special composition, having high fire-resistance, and satisfying the requirement of fire-resistance of 120 or even 180 minutes are suitable to avoid progressive collapse.

A further advantage of the method according to the invention is that the flame break-through is avoidable at the couplings.

The fire-resistance is increased by the geometry of the connection points, together with the fillers and sealing materials used.

It is noted that the compositions given in the description of the invention are non-limiting examples.

### LIST OF REFERENCE NUMBERS

- 1: wall panel
- 2: protrusion
- 2: recess
- 3: washer
- 4: mortar
- 5: jointing
- 6: reinforcement
- 7: wall panel
- 8: column
- 9: mortar
- 10: jointing
- 11a: load-bearing part
- 11b: skin
- 12a: load-bearing part
- 12b: skin
- 13: dowel
- 14: washer
- 15: seal mortar
- 16: filler
- 17: silicone seal
- 18: jointing
- 19: column
- 20: fastener
- 21: fastener
- 22: filler
- 23: fastener
- 24: screw
- 25: seal
- 26: seal
- 27: heat insulation
- A: fire-exposed side
- B: proofed wall
- I: section

## Claims

1. Method for connecting wall panels to each other and to a column, wherein junctions are formed at the connection regions, wherein forming said junctions is realized by using shaped connecting parts and/or reinforcements and/or fasteners, and wherein said junctions are sealed once the connecting process is complete, **characterized in that** following the step of connecting, the joints between the load-bearing connection surfaces are filled with a fire-resistant high-strength non-shrink mortar (4, 9, 15) by means of junctions formed in the wall panels (1, 2, 11, 12) and/or in the wall panels (7, 8, 11, 12) and the column (8, 19) made of a concrete with C50/60 strength class and with a bulk density of 2000 to 2500 kg/m³ containing hollow synthetic fibers, preferably having a length of 10 mm, then the joints are sealed with a resilient fire-resistant sealing material (5, 18, 25) from the fire-exposed side (A).

2. Method according to claim 1, **characterized in that** interconnecting the single-layer wall panels (1, 2) is carried out by means of a stepped configuration for enhancing fire-protection, wherein a washer (3) is disposed between a protrusion (1a) of one (1) of the wall panels and a recess (2a) of the other wall panel (2) for adjusting the level.

3. Method according to claim 1, **characterized in that** a reinforcement (6) is disposed subsequently between the single-layer wall panel (7) and the support (8) column for interconnecting the single-layer wall panel (7) and the column (8), and the environment of said reinforcement is filled with a fire-resistant high-strength non-shrink mortar.

4. Method according to claim 1, **characterized in that** a dowel (13) is inserted in the load-bearing part (11a, 12a) for interconnecting the sandwich-structure wall panels (11, 12), and the environment of said dowel is filled with a fire-resistant high-strength non-shrink mortar (15).

5. Method according to claim 1, **characterized in that** a reinforcement is disposed in the carrier layer (11a) of the sandwich panel (11) during interconnecting the sandwich-structure wall panel (11) and a column (19), said reinforcement is coupled with a fastener (23) connected to a fastener (21) being mounted in the column (19) during the production to preserve the bearing capacity, and these are fastened with a screw (24), then the connection region is filled with a fire-resistant filler (22).

6. Method according to claim 1, **characterized in that**, in the case of intermediate wall panels, interconnecting the sandwich-structure wall panel (11) and the column (19) is carried out by using a dowel (13) increasing the load-bearing capacity, inserted in the column (19) and the load-bearing part (11a) of the wall panel.

7. Method according to any one of claims 1 to 6, **characterized in that** filling the connection points is carried out by using a filling mortar preferably with a chloride-ion content of ≤ 0.5 mm/%.

8. Method according to any one of claims 1 to 7, **characterized in that** the jointing (18) at the connection points is sealed with a sealing material providing insulation, preferably with a halogen and solvent free silicone based sealing material.

## Patentansprüche

1. Verfahren zum Verbinden von Wandplatten miteinander und mit einer Säule, wobei an den Verbindungsbereichen Kopplungen gebildet werden, wobei Bilden der Kopplungen unter Verwendung von geformten Verbindungsteilen und/oder Verstärkungselementen und/oder Befestigungselementen durchgeführt wird und wobei die Kopplungen abgedichtet werden, sobald der Verbindungsvorgang abgeschlossen ist, **dadurch gekennzeichnet, dass** nach dem Schritt des Verbindens die Verbindungsstellen zwischen den lasttragenden Verbindungsoberflächen mit einem feuerbeständigen hochfesten schrumpfungsfreien Mörtel (4, 9, 15) gefüllt werden, mithilfe von in den Wandplatten (1, 2, 11, 12) und/oder in den Wandplatten (7, 8, 11, 12) und der Säule (8, 19) aus einem Beton der Festigkeitsklasse C50/60 und mit einer Volumendichte von 2000 bis 2500 kg/m³, der synthetische Hohlfasern, vorzugsweise mit einer Länge von 10 mm, enthält, gebildet en Kopplungen, und die Verbindungsstellen anschließend mit einem elastischen feuerbeständigen Dichtmaterial (5, 18, 25) an der feuerexponierten Seite (A) abgedichtet werden.

2. Verfahren gemäß Anspruch 1, **dadurch gekennzeichnet, dass** Verbinden der einlagigen Wandplatten (1, 2) miteinander mithilfe einer stufenförmigen Konfiguration zum Verbessern des Brandschutzes durchgeführt wird, wobei eine Beilage (3) zwischen einem Vorsprung (1a) einer (1) der Wandplatten und einer Vertiefung (2a) der anderen Wandplatte (2) zum Einstellen der Höhe angeordnet wird.

3. Verfahren gemäß Anspruch 1, **dadurch gekennzeichnet, dass** anschließend eine Verstärkung (6) zwischen der einlagigen Wandplatte (7) und der Trägersäule (8) angeordnet wird, um die einlagige Wandplatte (7) und die Säule (8) zu verbinden, und die Umgebung der Verstärkung mit einem feuerbeständigen hochfesten schrumpfungsfreien Mörtel gefüllt wird.

4. Verfahren gemäß Anspruch 1, **dadurch gekennzeichnet, dass** ein Dübel (13) in den lasttragenden Teil (11a, 12a) eingeführt wird, um die Wandplatten mit Sandwichstruktur (11, 12) zu verbinden, und die Umgebung des Dübels mit einem feuerbeständigen hochfesten schrumpfungsfreien Mörtel (15) gefüllt wird.

5. Verfahren gemäß Anspruch 1, **dadurch gekennzeichnet, dass** während des Verbindens der Wandplatte mit Sandwichstruktur (11) und einer Säule (19) eine Verstärkung in der Trägerschicht (11a) der Sandwichplatte (11) angeordnet wird, wobei die Verstärkung mit einem Befestigungselement (23) gekoppelt wird, das mit einem während der Herstellung in der Säule (19) angebrachten Befestigungselement (21) verbunden ist, um die Tragekapazität zu bewahren, und diese mit einer Schraube (24) festgemacht werden, und anschließend der Verbindungsbereich mit einem feuerbeständigen Füllstoff (22) gefüllt wird.

6. Verfahren gemäß Anspruch 1, **dadurch gekennzeichnet, dass** im Fall von zwischenliegenden Wandplatten das Verbinden der Wandplatte mit Sandwichstruktur (11) und der Säule (19) unter Verwendung eines Dübels (13) durchgeführt wird, der die Lasttragekapazität erhöht und der in die Säule (19) und den lasttragenden Teil (11a) der Wandplatte eingeführt wird.

7. Verfahren gemäß einem der Ansprüche 1 bis 6, **dadurch gekennzeichnet, dass** Füllen der Verbindungspunkte unter Verwendung eines Füllmörtels ausgeführt wird, der vorzugsweise einen Chloridionengehalt von ≤ 0,5 mm/% aufweist.

8. Verfahren gemäß einem der Ansprüche 1 bis 7, **dadurch gekennzeichnet, dass** die Verbindung (18) an den Verbindungspunkten mit einem Dichtmaterial abgedichtet wird, das Isolierung bereitstellt, vorzugsweise mit einem Dichtmaterial auf halogen- und lösungsmittelfreier Siliconbasis.

## Revendications

1. Procédé destiné à raccorder des panneaux muraux entre eux et à une colonne, dans lequel des jonctions sont formées au niveau des régions de raccordement, dans lequel la formation desdites jonctions est réalisée au moyen de pièces de raccordement façonnées et/ou de renforts et/ou de pièces de fixation, et dans lequel lesdites jonctions sont scellées une fois que l'opération de raccordement est achevée, **caractérisé en ce qu'**après l'étape de raccordement, les joints entre les surfaces de raccordement porteuses sont remplis avec un mortier ignifuge à haute résistance sans retrait (4, 9, 15) au moyen de jonctions formées dans les panneaux muraux (1, 2, 11, 12) et/ou dans les panneaux muraux (7, 8, 11, 12) et la colonne (8, 19) constituées d'un béton avec une classe de résistance C50/60 et avec une masse volumique apparente de 2000 à 2500 kg/m³ contenant des fibres synthétiques creuses, de préférence ayant une longueur de 10 mm, puis les joints sont scellés avec un matériau d'étanchéité élastique ignifuge (5, 18, 25) depuis le côté exposé au feu (A).

2. Procédé selon la revendication 1, **caractérisé en ce que** l'interconnexion des panneaux muraux monocouches (1, 2) est réalisée au moyen d'une configuration en gradins pour améliorer la protection au feu, dans lequel une rondelle (3) est disposée entre une saillie (1a) d'un (1) des panneaux muraux et une encoche (2a) de l'autre panneau mural (2) pour régler le niveau.

3. Procédé selon la revendication 1, **caractérisé en ce qu'**un renfort (6) est ensuite disposé entre le panneau mural monocouche (7) et la colonne de support (8) pour interconnecter le panneau mural monocouche (7) et la colonne (8), et l'environnement dudit renfort est rempli avec un mortier ignifuge à haute résistance sans retrait.

4. Procédé selon la revendication 1, **caractérisé en ce qu'**un goujon (13) est inséré dans la partie porteuse (11a, 12a) pour interconnecter les panneaux muraux à structure sandwich (11, 12), et l'environnement dudit goujon est rempli avec un mortier ignifuge à haute résistance sans retrait (15).

5. Procédé selon la revendication 1, **caractérisé en ce qu'**un renfort est disposé dans la couche de support (11a) du panneau sandwich (11) pendant l'interconnexion du panneau mural à structure sandwich (11) et d'une colonne (19), ledit renfort est couplé à une pièce de fixation (23) raccordée à une pièce de fixation (21) montée dans la colonne (19) pendant la production pour préserver la capacité portante, et celles-ci sont fixées avec une vis (24), puis la région de raccordement est remplie avec une charge ignifuge (22).

6. Procédé selon la revendication 1, **caractérisé en ce que**, dans le cas de panneaux muraux intermédiaires, l'interconnexion du panneau mural à structure sandwich (11) et de la colonne (19) est réalisée au moyen d'un goujon (13) augmentant la capacité portante, inséré dans la colonne (19) et la partie porteuse (11a) du panneau mural.

7. Procédé selon l'une quelconque des revendications 1 à 6, **caractérisé en ce que** le remplissage des points de raccordement est réalisé au moyen d'un mortier de remplissage de préférence avec une teneur en ions chlorure ≤ 0,5 mm/%.

8. Procédé selon l'une quelconque des revendications 1 à 7, **caractérisé en ce que** le jointoiement (18) au niveau des points de raccordement est scellé avec un matériau d'étanchéité assurant l'isolation, de préférence avec un matériau d'étanchéité à base de silicone sans halogène ni solvant.
